# EUROPEAN PATENT APPLICATION

(11) **EP 0 715 441 A1**
(43) Date of publication of application: **05.06.1996**
(21) Application number: 95308122.1
(22) Date of filing: 14.11.1995
(51) Int. Cl.: H04M 1/02, H04M 1/72

(54) **Roller bar menu access system and method for cellular telephones**

(30) Priority: 28.11.1994 US 345150
(71) Applicant: AT&T Corp., New York, NY 10013-2412 (US)
(72) Inventor: Estevez-Alcolado de Holl, Sonia Mercedes, Holmdel, New Jersey 07733 (US)
(74) Representative: Buckley, Christopher Simon Thirsk

(57) **Abstract**

A cellular telephone includes a display (102), a roller bar (104) and a select button (106). The display presents menus of cellular telephone functions. The roller bar (104) permits the user to scroll the menus of cellular telephone functions. The select button (106) permits the user to select one of the cellular telephone functions from the displayed menus (102). If a menu of cellular telephone functions is longer than can be presented on the display, then the roller bar permits the user to pan the menu.

## Description

### Background of the Invention

### Field of the Invention

The present invention relates generally to cellular telephones. More particularly, the present invention is directed to a system and method of displaying, scrolling and selecting cellular telephone functions on a cellular telephone.

### Related Art

As cellular telephones become more sophisticated, the number of functions that the cellular telephone can perform will increase. Along with this increased number of functions, there will be a need to provide quick and easy access to those functions.

Most conventional cellular telephones have a keypad for selecting cellular telephone functions (hereafter called functions), such as placing telephone calls, configuring the cellular telephone or creating a directory of telephone numbers. This method works well when only a few functions are available. However, as the complexity of the cellular telephone increases, more keys must be added to the keypad. Alternatively, more than one function can be assigned to a single key. In the latter case, the functions of that single key are accessed using one or more function keys.

Adding more keys or assigning more than one function to a single key has several serious disadvantages for cellular telephones. First, increasing the number of keys increases the size of the keypad. Since size is a major concern in cellular telephones, and the keypad is one of the larger components, increasing the size of the keypad is counter to the goal of reducing size. Another serious disadvantage of adding keys or assigning multiple functions to keys is the complexity of finding the key that corresponds to the desired function. The above mentioned disadvantages force cellular telephone designers to trade-off increased functionality versus size and convenience.

Other conventional cellular telephones provide a display to present user-selectable functions. The functions presented on the display are scrolled via arrow keys which scroll the displayed functions. The major disadvantage of arrow keys is that they typically only function at one speed. Therefore, arrows keys are typically too slow when attempting to scroll many displayed functions. If the speed of the arrow keys is increased, then the desired function can be overshot when attempting to scroll a few displayed functions.

What is desired is an system and method adaptable to conventional cellular telephones for quickly and easily accessing all functions.

### Summary of the Invention

The present invention is an system and method for displaying, scrolling and selecting cellular telephone functions on a cellular telephone. The present invention overcomes the problems of conventional methods for displaying and selecting functions on cellular telephones. The present invention includes a display for presenting a menu of functions, a roller bar permitting the user to scroll to one or more of the displayed functions, and a select button permitting the user to select the scrolled-to function(s).

The present invention allows quick and easy access to many functions without increasing the size of the keypad or assigning multiple functions to an individual key. In addition, the present invention allows a displayed menu of functions to be scrolled at a rate chosen by the user. For example, when the user desires to move quickly through the menu of functions, the roller bar can be moved quickly. However, when the user desires to move slowly through the menu of functions, the roller bar can be moved slowly.

In the preferred embodiment, the roller bar is a cylindrical device which permits scrolling one-dimensional menus of functions. In another embodiment, the roller bar is replaced with a spherical device which permits scrolling multi-dimensional menus of functions.

The present invention is a quick and easy method of displaying, scrolling and selecting functions. The invention reduces the size of cellular telephones by reducing the number of keys. Additionally, the invention is convenient and easy to use. The present invention allows many functions to be displayed, while maintaining a small area and convenient access.

The foregoing and other features and advantages of the present invention should be apparent from the following description when taken in conjunction with the accompanying drawings.

### Brief Description of the Drawings

Figure 1 is a perspective view of a cellular telephone with a roller bar and a select button, in accordance with the present invention.

Figure 2 is a block diagram of the cellular telephone apparatus for displaying, scrolling, selecting and executing cellular telephone functions in accordance with the present invention.

Figure 3 is a flow chart illustrating the operation of the apparatus of Figure 2.

### Detailed Description of the Preferred Embodiments

The preferred embodiment of the invention is discussed in detail below. While specific part numbers and configurations are discussed, it should be understood that this is done for illustration purposes only. A person skilled in the relevant art will recognize that other components and configurations may be used without parting from the spirit and scope of the invention.

The preferred embodiment of the invention is now described with reference to the figures where like reference numbers indicate like elements. In addition, the left-most digit of each reference number indicates the figure in which the number is first used.

The present invention is an system and method for displaying menus of functions, scrolling those menus, and selecting functions from those menus. The present invention thus provides quick and easy access to the functions of a cellular telephone.

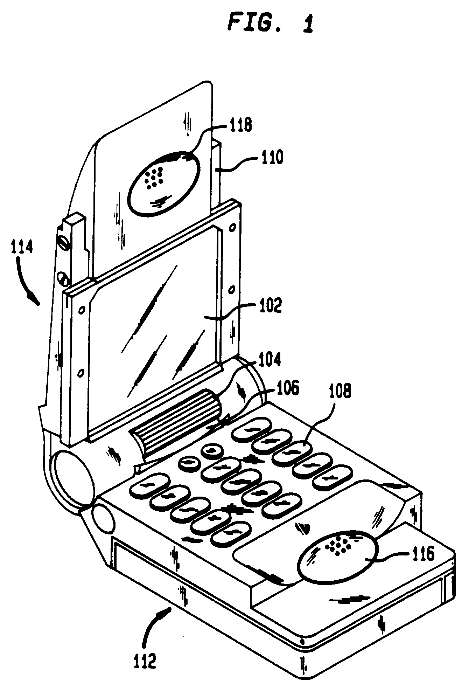

Figure 1 shows a cellular telephone with roller bar menu access according to a preferred embodiment of the present invention. The cellular telephone comprises a housing 110, a display 102, a roller bar 104, a select button 106, and a keypad 108.

Menus of user-selectable functions are presented on display 102. Roller bar 104 permits the user to scroll the menus of displayed functions. The user can select one or more function(s) to execute using select button 106. Any number of the functions can be presented on display 102 and selected via roller bar 104 and select button 106. Keypad 108 permits the user to make numeric or alphanumeric entries. A subset of the functions can still be selected via keypad 108.

In the preferred embodiment, housing 110 comprises two foldably connected sections. A lower section 112 includes keypad 108, roller bar 104, and a microphone/mouth-piece 116. An upper section 114 includes display 102 and a transducer/ear-piece 118. The above described housing is not critical to the invention and thus will not be described in detail.

Display 102 presents menus of functions, such as placing a cellular telephone call, configuring the telephone or creating a directory of telephone numbers. These menus are scrolled and functions from those menus are selected via roller bar 104 and select button 106, which are discussed in detail below. In the preferred embodiment, display 102 is implemented using a liquid crystal display (LCD). However, it would be apparent to a person skilled in the relevant art that other types of displays could be used.

Roller bar 104 permits a user to scroll the menu of functions presented on display 102. Roller bar 104 is a type of pointing device. Roller bar 104 allows the rate of scrolling to be determined by the user. For example, when the user desires to move quickly through the menu of functions, the roller bar can be moved quickly. However, when the user desires to move slowly through the menu of functions, the roller bar can be moved slowly.

As the user rotates roller bar 104, the movement is converted into electrical signals called scrolling commands. These scrolling commands are used to scroll the menu of functions. Roller bar 104 is implemented using known methods for converting physical movement into electrical signals. Hardware and software techniques used in personal computer pointer devices, such as track balls and mouse devices, can be adapted to implement the present invention.

In the preferred embodiment, roller bar 104 is a cylindrical device which allows a user to scroll in one dimension. The menus of functions presented on display 102 are likewise one-dimensional (i.e. a menu is presented as a list of functions to choose from). Thus, roller bar 104 permits a user to scroll up and down a menu of functions.

Alternatively, in another embodiment of the present invention, the roller bar can be replaced with a spherical device which permits motion in multiple dimensions. The menus of functions would likewise be multi-dimensional and the spherical device would permit a user to scroll up, down, right, left or diagonally. An example of conventional multi-dimensional menus are pull-down menus used in many computer software applications.

If the complete menu of functions exceeds the number of functions that can be presented on display 102, then only a subset of the complete menu is displayed at one time. Roller bar 104 enables the user to modify the subset of functions presented on display 102 by scrolling past the uppermost or lowermost displayed function. For example, by scrolling above the uppermost displayed function, the functions above the previously uppermost displayed function are displayed. This pushes the previous lowermost functions off the display. This operation, called panning, permits a user to view a subset, or window, of functions, while scrolling the menu of functions.

Select button 106 permits the user to select one or more scrolled-to function(s). The selected function(s) is/are then executed by the cellular telephone. When a user activates select button 106, electrical signals called selection commands are created. The selection commands allow the user to select a scrolled-to function. Select button 106 is implemented using a push button switch, or the like, as would be apparent to a person skilled in the relevant art. Hardware and software techniques used in personal computer selection devices, such as track ball and mouse buttons, can be adopted to implement the present invention.

In the preferred embodiment, select button 106 is located below roller bar 104, as shown in Figure 1. In another embodiment, the select button is housed underneath roller bar 104, and is activated by pressing roller bar 104.

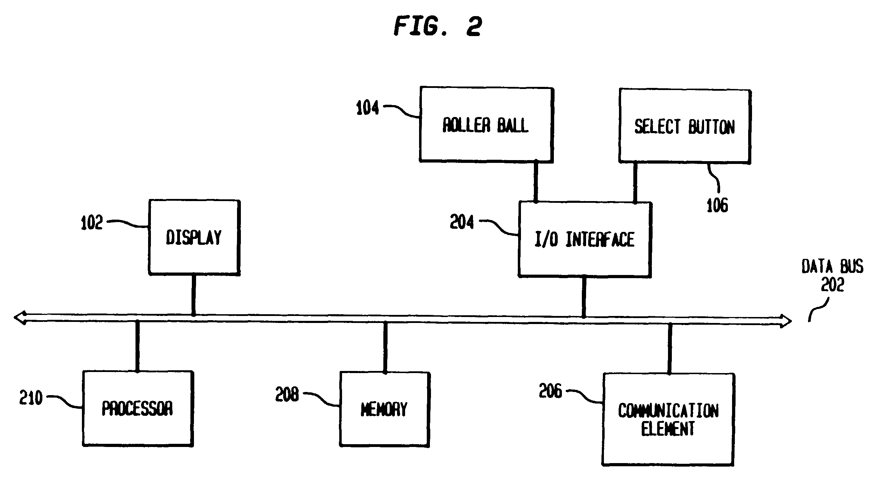

Figure 2 illustrates a block diagram of the cellular telephone apparatus for displaying, scrolling, selecting and executing functions. The apparatus includes a data bus 202, display 102, a processor 210, a memory 208, a communication element 206, an I/O interface 204, roller bar 104, and select button 106.

Processor 210 and memory 208 are implemented using well-known methods of processing and data storage. Communication element 206 is implemented using well-known methods of performing cellular telephone communications. I/O interface 204 is implemented using well-known methods of interfacing physical devices with control software or firmware.

Data bus 202 interconnects the elements of the apparatus. In the preferred embodiment, all communications between elements are performed via data bus 202. Data bus 202 can be any of a variety of standard data busses or an application-specific data bus.

Roller bar 104 communicates to processor 210 via I/O interface 204 and data bus 202. Likewise, select button 106 communicates to processor 210 via I/O interface 204 and data bus 202. Processor 210 communicates with display 102, memory 208, communication element 206, and I/O interface 204 via data bus 202. Display screen 102 communicates with processor 210 via data bus 202. Memory 208 communicates with processor 210 via data bus 202. Communication element 206 communicates with processor 210 via data bus 202.

Processor 210 reads a menu of functions from memory 208 and presents the menu on display 102, or a subset of the menu is presented on display 102 if the size of the menu exceeds the number of functions that can be displayed at one time. Processor 210 receives scrolling commands from roller bar 104 via I/O interface 204. The menu of functions presented on display 102 is scrolled in accordance with scrolling commands received from roller bar 104. Processor 210 receives selection commands from select button 106 via I/O interface 204. The currently scrolled-to function(s) is/are selected in accordance with the selection commands. The selected function(s) is/are then executed. Communication element 206 executes all telecommunication-related functions. For example, communication element 206 can place a cellular telephone call. Non-telecommunication functions are executed by processor 210. For example, processor 210 can configure the cellular telephone or create a directory of telephone numbers.

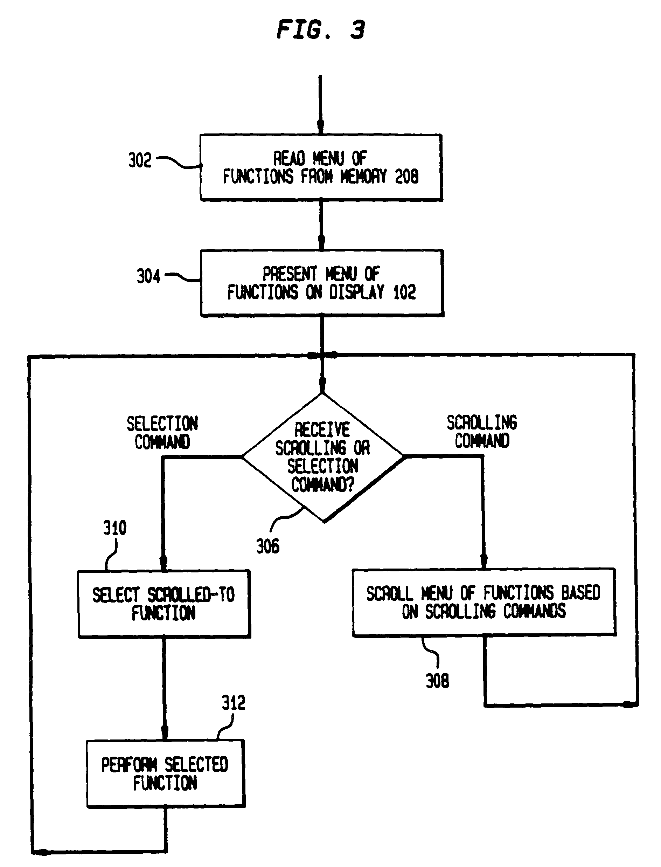

Figure 3 is a flow chart illustrating the operation of the apparatus of Figure 2. In a step 302, processor 210 reads a menu of functions from memory. In a step 304, the menu is presented on display 102. In a decisional step 306, processor 210 receives either a scrolling command or a selection command. If processor 210 receives a scrolling command, then in a step 308 the menu of functions is scrolled based on the scrolling command. Processor 210 then returns to decisional step 306 to wait for another scrolling command or a selection command. If processor 210 receives a selection command at decisional step 306, then in a step 310 the scrolled-to function is selected, and in a step 312 the selected function is executed. Processor 210 then returns to decisional step 306 to wait for another selection command or a scrolling command.

While the invention has been particularly shown and described with reference to several preferred embodiments thereof, it will be understood by those skilled in the art that various changes in form and details may be made therein without departing from the spirit and scope of the invention as defined in the appended claims.

## Claims

1. A cellular telephone, comprising:
a display for presenting a menu of cellular telephone functions;
a roller bar to scroll to one of said cellular telephone functions;
a select button to select a scrolled-to cellular telephone function; and means for executing a selected cellular telephone function.

2. A cellular telephone, comprising:
a display for presenting a menu of cellular telephone functions, wherein said menu of cellular telephone functions is multi-dimensional;
a track ball to scroll to one of said cellular telephone functions;
a select button to select a scrolled-to cellular telephone function; and means for executing a selected cellular telephone function.

3. A method of displaying and selecting cellular telephone functions on a cellular telephone, comprising the steps of:
(a) displaying a menu of cellular telephone functions;
(b) receiving scrolling commands from a user via a pointing device, wherein the rate of said scrolling commands is controlled by said user;
(c) scrolling to one of said cellular telephone functions based on said scrolling commands;
(d) selecting a scrolled-to cellular telephone function; and
(e) executing a selected function.

4. The method of claim 3 wherein step (b) further comprises the step of using a roller bar.

5. The method of claim 3 wherein step (b) further comprises the step of using a track ball.

6. A method of displaying and selecting menu information on a cellular telephone, comprising the steps of:
(a) reading a menu of cellular telephone functions from a memory;
(b) displaying said menu of cellular telephone functions;
(c) receiving scrolling commands from a user via a pointing device, wherein the rate of said scrolling commands is controlled by said user;
(d) scrolling to one of said cellular telephone functions based on said scrolling commands;
(e) receiving a selection command;
(f) selecting a scrolled-to function; and
(g) executing a selected function.

7. The method of claim 6 wherein step (c) further comprises the step of using a roller bar.

8. The method of claim 6 wherein step (b) further comprises the step of displaying multi-dimensional menus and step (c) further comprises the step of using a track ball.
